# EUROPEAN PATENT SPECIFICATION

(11) **EP 1 443 712 B1**
(45) Date of publication and mention of the grant of the patent: **03.05.2006**
(21) Application number: 04397006.0
(22) Date of filing: 30.01.2004
(51) Int. Cl.: H04L 12/28, H04Q 7/38

(54) **A method and a system for controlling handoff of a terminal**
Verfahren und System zur Steuerung des Weiterreichens eines Endgeräts
Procédé et système pour contrôler le transfert d'un terminal

(30) Priority: 30.01.2003 FI 20030142
(43) Date of publication of application: 04.08.2004
(73) Proprietor: TeliaSonera Finland Oyj, 00510 Helsinki (FI)
(72) Inventor: Korhonen, Jouni, 11100, Riihimäki (FI); Erkkilä, Antti, 01600, Vantaa (FI)
(74) Representative: Rönkkö, Taina Mirjam

(56) References cited:
- EP-A- 0 917 328
- US-A1- 2002 067 704
- FOO S F ET AL: "REGIONAL AWARE FOREIGN AGENT (RAFA) FOR FAST LOCAL HANDOFFS DRAFT-CHUAFOO-MOBILEIP-RAFA-00.TXT" INTERNET ENGINEERING TASK FORCE INTERNET DRAFT, XX, XX, November 1998 (1998-11), pages 1-21, XP002195255
- "IEEE Standard for Local and metropolitan area networks - Port-based Network Access Control" IEEE STD 802.1X-2001, XX, XX, 14 June 2001 (2001-06-14), pages 7-21, XP002270244
- PERKINS C E: "MOBILE IP" IEEE COMMUNICATIONS MAGAZINE, IEEE SERVICE CENTER. PISCATAWAY, N.J, US, vol. 35, no. 5, 1 May 1997 (1997-05-01), pages 84-86,91-99, XP000657114 ISSN: 0163-6804

## Description

The present invention relates to a method for controlling handoff taking place from a wireless data transfer network to another, which method is presented in the preamble of the independent claim 1. The invention also relates to a system implementing the method, which system is described in the preamble of the appended independent claim 5.

The routing algorithms used in the Internet have originally been developed with the assumption that the location of the computers in relation to the structure of the network does not change. The computer has an IP address (Internet Protocol), which is fixed and located in some specific sub-network. If the location of the computer is desired to be changed, the IP address is to be changed to another, because when in another sub-network, the routing to the IP address in question does not function. Changing the IP address requires maintenance work, which is not always easy. As a solution to the problem, the Mobile IP has been developed, which is designed for mobile terminals (later terminal). A mobile terminal here refers to an electronic device, which is capable of at least wireless data transfer with a short-range radio connection. The electronic device supports advantageously other known wireless data transfer methods as well.

The Mobile IP solves the problems brought on by handoff by changing the routing, which is Implemented by means of agents. A home network is specified for each terminal, to which the incoming traffic is routed. In the home network there is a Home Agent, which knows the actual locations of the terminals belonging to its home network. In a sub-network offering services for visiting terminals, there is a Foreign Agent, which knows what visitors are in the sub-network.

Thus, the terminal keeps its IP address, irrespective of its location. The home agent handles directing the traffic to the foreign agent, which distributes the data packets to the terminal and handles routing outwards from the terminal. In determining the location data of a terminal, methods such as agent discovery and registration are used. Via agent discovery, the terminal receives information on its current host network, and by means of registration, data is transmitted from the terminal to its home agent.

The home and foreign agents of each network inform their existence to those links that they offer services to. Along with this, the terminal using the network knows whether it is in its home network, or if it must use a foreign agent to handle its traffic. In addition, the terminal finds out via which foreign agents it can operate and what the addresses of these agents are. When the terminal transfers away from the area of the network, it removes from the address book those agents that it no longer has a connection to.

By registering, the terminal can request its current foreign agent to direct the outbound traffic, or to transmit information on its existence. To its home agent, the terminal transmits the address of its current foreign agent. To the foreign agent, the terminal sends a re-registration request, if its registration is expiring, or a registration removal request, if it comes to its home network. By means of registration, the terminal can, if necessary, determine via which foreign agent it operates, or, if necessary, use several foreign agents simultaneously, if the apparatus supports this possibility.

The routing used in the Mobile IP is called triangular routing. The basic run of the triangular routing is such that when a data packet is sent to the terminal, it is routed to the home network of the terminal. The agent of the home network routes it further to a foreign agent in the sub-network where the terminal is. The foreign agent continues sending the packet to the terminal. The outwards traffic is routed in a normal manner directly to the sub-network of the target terminal. By changing the routing, the IP addresses used remain the same, as well as the protocols of the transport layer and the application level, as well as the IP protocol.

The Mobile IP provides a method for controlling handoff, but continuous transfers within a relatively small geographic area tend to form a significant amount of signalling because of the messaging between the home agent and the terminal. Fast and opaque transfers are difficult to implement with the methods according to prior art.

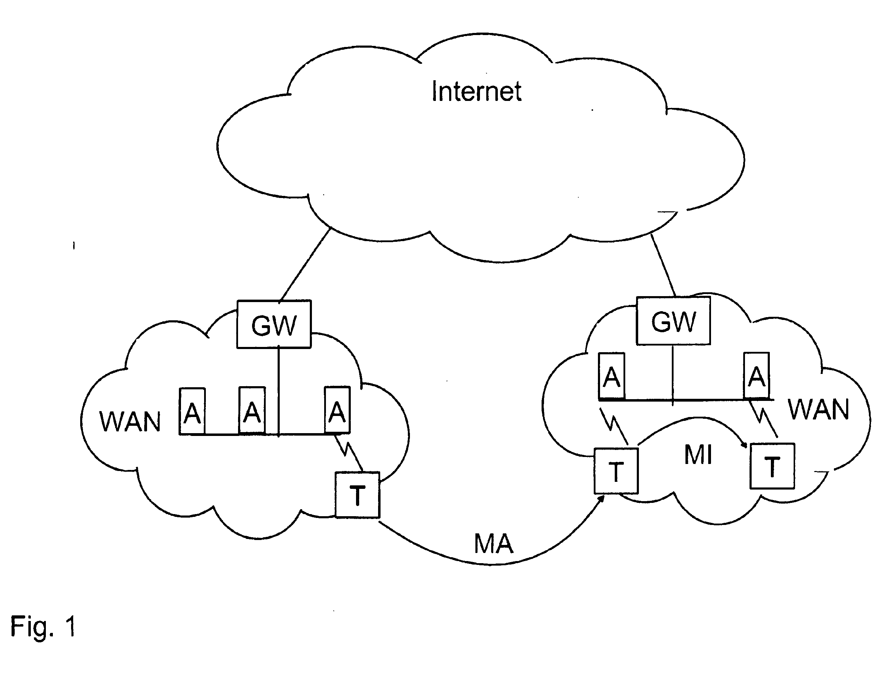

Solutions have been developed for the described problem, such as hierarchizing handoff. Handoff is sorted into two levels, the micromobility and macromobility. Macromobility describes handoff of the terminal from one control network area to another. Handoff within one control network is called micromobility. It is also possible to use the terms inter-domain and intra-domain of the hierarchy levels. Figure 1 presents an example of a network architecture, where two separate wireless networks WAN are connected to the Internet. Macromobility MA is a state, where the terminal T roams from one area to another. Micromobility MI means handoff within one wireless network and it is opaque to other parts of the network.

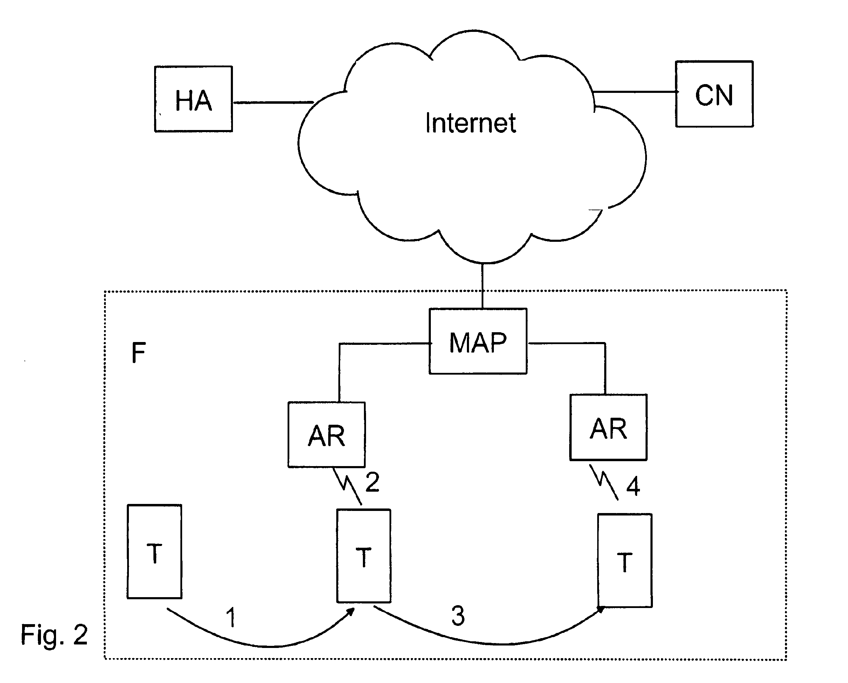

Fig 2 presents a Hierarchical Mobile IP (HMIP), which is one way to control handoff. In order to reduce control signalling between the terminal T in a foreign network F and the home agent HA, as well as the corresponding network nodes, the HMIP uses the network element MAP (Map Anchor Point). The purpose of the MAP element is to show the terminal T to the home agent, and thus hide the micromobility behind it.

In order to control handoff, there are also other methods, such as, for example, the Fast Mobile IP (FMIP), Cellular IP (CIP), HAWAII, CARD, TIMIP, EMA, BRAIN, etc.

The described methods reduce the network changes, signalling, visible to the home agent. In addition to this, it is possible to find a new router and format it by means of them. However, these prior art methods require certain type of routers as well as new protocols between the components. Because the purpose of the methods has been to reduce the number of registrations and to speed up transfers, they are insufficient in relation to procedures that are required in connection with registration and IP autoconfiguration. The term autoconfiguration refers to an event where an IP address is assigned to a terminal, by means of which it can communicate with external networks. Mainly this takes place with the DHCP (Dynamic Host Configuration Protocol) or the BOOTP (BOOTstrap Protocol). In addition to the above, the prior art methods do not solve the zero-configuration, in which case substantially no procedures are required of the user in the registration event. Through this, the introduction of different services is opaque to the user.

A method and system for controlling handoff according to the preambles of respective claims 1 and 5 are disclosed in the IETF Internet Draft, Nov. 1998, pages 1-21, by S.F. Foo et al.

The purpose of the present invention is to provide a method for those events that are connected to the zero-configuration and autoconfiguration between the IP and the Mobile IP. The invention aims to boost the registration of the Mobile IP and the autoconfiguration of the IP. According to the invention, this can be implemented, for example, by reducing the number of required message changes (round-trip), which are required when performing a network change and autoconfiguration.

In order to implement this, the method according to the present invention is mainly characterized in that autoconfiguration is performed for providing an address for the terminal to be used for directing the outbound traffic, and a foreign agent is found in order to determine the location of the terminal, in which method the previous procedures are combined to take place substantially simultaneously by means of a new service request/reply message pair being formed to be added to EAP protocol, and transferred as a part of the internal message exchange of the wireless data transfer network. The system according to the invention is mainly characterized in that the system comprises means for performing autoconfiguration for providing an address to the terminal to be used for directing the outbound traffic and means for foreign agent discovery and for determining the current location of the terminal, in which case the autoconfiguration and the foreign agent discovery are arranged to take place substantially during one message exchange, by means of a new service request/response message pair, which the system is arranged to form to be added to EAP protocol.

By means of the present invention it is possible to speed up the transfer of terminals, and in addition, handoff between two different wireless networks, such as a WLAN or the like, is facilitated. This is very advantageous because the micromobility between base stations, which is characteristic to a wireless local area network and internal to the network, is not possible when the macromobility takes place between networks on the Mobile IP level.

The autoconfiguration implemented by means of the method according to the invention is, in addition, very data secure because of the local area network standard that is being used. The number of required message changes can be reduced from four to even two by means of the invention. In addition, it is to be noted that even though the invention focuses on the WLAN environment, it is backwards compatible in substantially all access networks. In addition to autoconfiguration and agent discovery, it is possible to by means of the invention bring to the terminal also other data on the topology of the WLAN network in question, as well as of access routers. Thus, the data required for speeding up handoff can be transmitted to the terminal.

The present invention will be described in more detail in the following with reference to the appended drawings, in which
- Fig. 1: presents, in principal, a network architecture and the micromobility and macromobility connected to it,
- Fig. 2: presents, in principal, the structure of a hierarchical Mobile IP network,
- Figs. 3a to c: present examples of a service request/response packet expanded according to the invention,
- Figs. 4a to c: illustrate an especially advantageous example of signalling of the method according to the invention, and
- Fig. 5: illustrates another especially advantageous example of signalling of the method according to the invention.

The present invention utilizes the 802.1X standard (IEEE, 802.1X) in the WLAN environment, which standard is known as the data security standard. The invention is described more in detail first through a solution according to prior art, in which case the advantages provided by the method according to the invention can be better realized. Said 802.1X standard is designed for identification, for determining rights, as well as for exchanging data connected to invoicing before the autoconfiguration performed for the IP. The 802.1X uses the EAP protocol (Extensible Authentication Protocol) or a variation made of it. According to prior art, access to the IP in the WLAN environment is enabled only after a successful identification performed by the 802.1X, in which case said autoconfiguration is performed. As a result of this, the terminal receives an IP address. After the autoconfiguration, an agent discovery typical for the Mobile IP is performed by means of Router Advertisements as well as Router Solicitations. After this, the registration required by the Mobile IP (Binding, Binding Update) is performed according to prior art. After registration it is possible to continue the normal IP traffic used by the applications, for example the TCP traffic (Transport Control Protocol).

The above description is an example of prior art. In the method according to the present invention, the divi sion of the IP address (autoconfiguration) and the agent discovery are combined and moved as a part of the internal negotiation of the 802.1X. This is implemented by adding a new service request/response message pair to the EAP protocol used by the 802.1 X, by means of which an autoconfiguration containing several message changes is avoided (the number typical for the DHCP is 2 to 4). Similarly, the explicit agent discovery is avoided, which usually requires repeated grouped transmission to the network, listening to the answers for them, as well as preparation for time-outs.

The invention can advantageously be expanded more towards the zero-configuration. Thus, the terminal, for example, transmits its own APN identifier (Access Point Name) during an EAP negotiation. On the basis of the APN (known from GPRS networks) it is possible to find the home network of the terminal and to add parameters connected to autoconfiguration and zero-configuration to the terminal.

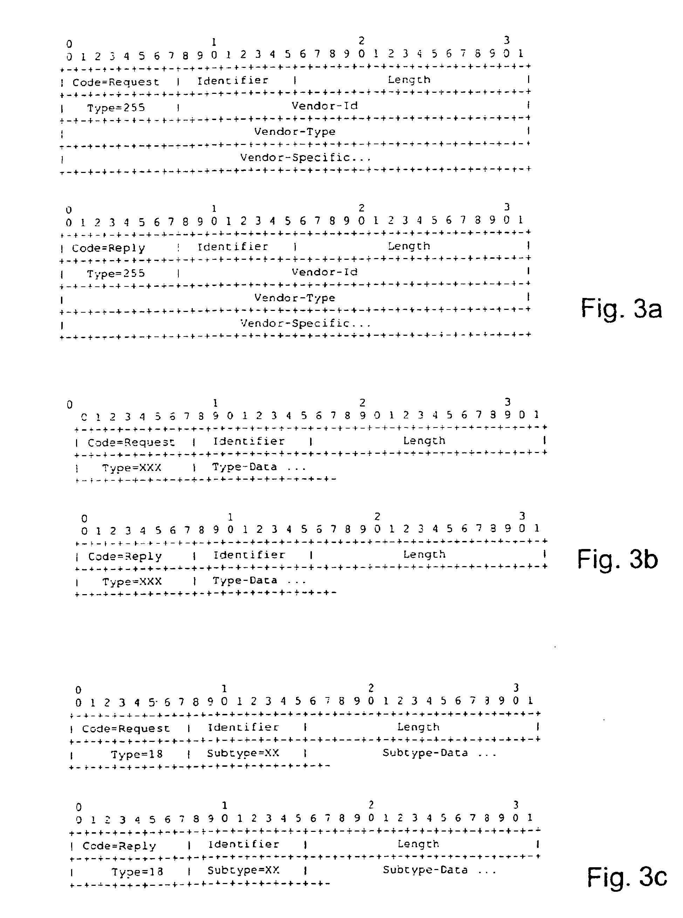

The expansion according to the invention to the EAP protocol of the 802.1X can be implemented according to one advantageous embodiment in such a manner that the "Vendor Specific" type (Type=255) in the EAP Request / Reply messages is used for messages. Fig. 3a presents the packet form for said message. The field "Vendor ID" of the packet tells the code of the service provider (SMI Network Management Private Enterprise Code of the Vendor), which is determined in the IETF RFC 1007. The "Vendor Type" describes a service provider centered method type. The content of the "Vendor Specific" field is determined by each service provider.

According to another advantageous embodiment of the invention, the expansion is implemented in such a manner that a new EAP Request /Reply message type is made in addition to the ones existing. In this case the type number must be accepted in the IANA (Internet Assigned Numbers Authority) of the IETF (Internet Engineering Task Force). Fig. 3b presents the form of the Request and Reply packet. The field "Type=XXX" is for autoconfiguration (Type=Autoconfig). The type field determines the type of the service request or reply. A new type is to be named by the IETF. The "Type-Data" field varies between the service request type and the reply type corresponding to it.

The third advantageous embodiment for implementing the expansion according to the invention is to make the expansions a part of the negotiated protocol inside the EAP, for example as a part of the EAP/SIM method (Subscriber Identity Module) or the EAP/AKA method (Authentication and Key Agreement). Thus, new versions of the protocols in question are to be acquired also by standardization. The EAP/SIM is an enhanced GSM identification method (Global Standard for Mobile Communication), which makes it possible to use the existing SIM cards and GSM network visits. The EAP/AKA is a method where the USIM/SIM cards (User Services Identity Module) are used in the UMTS/GSM network visits (Universal Mobile Telecommunication System). Fig. 3c presents a form of the EAP/SIM Request / Reply packets. The field "Type = 18" states that it is EAP/SIM. This kind of an EAP type has the field "Subtype", to which is determined a new type number for autoconfiguration (Subtype=Autoconfig). The new type marked here is to be determined by the IETF. "Sub-type Data" determines the data connected to the field (attributes, length, value, etc.).

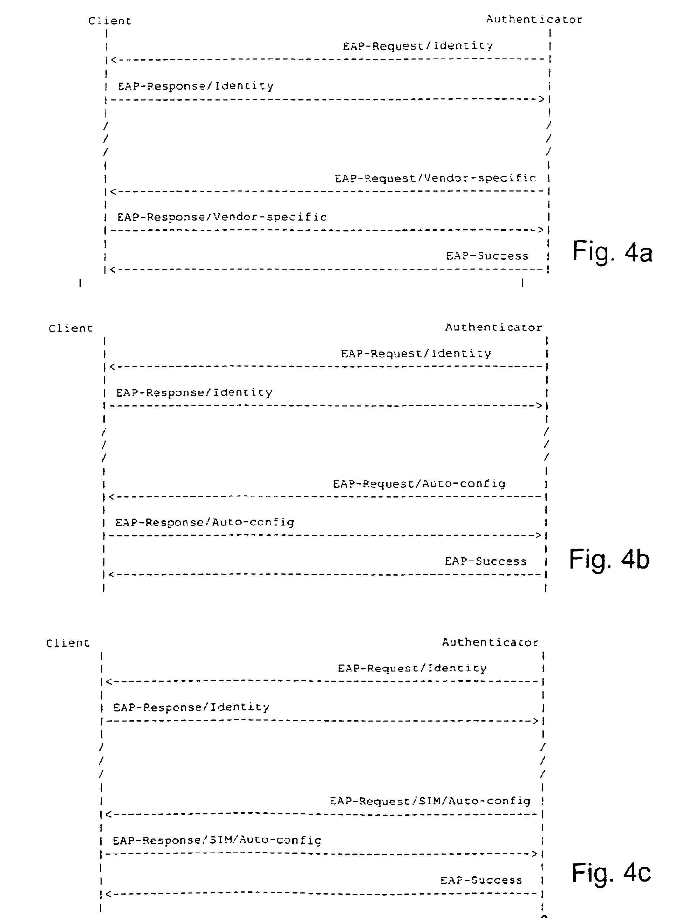

An advantageous embodiment of the invention from an auto/zero-configuration negotiation is presented in figs. 4 a to c. The signalling charts presented in the figure show a simple "push"-type requestresponse autoconfiguration, where the packets according to figs 3a to c are used correspondingly. The element performing the user authentication (later authenticator) identifies the terminal (Client) with a EAP Request/Identity request, to which the terminal replies with a EAP Response/Identity reply. After this authentication, message exchanging connected to a certain EAP (fig 3a, 3b) or EAP/SIM (fig. 3c) takes place between the terminal and the authenticator.

Next, parameters connected to auto/zero-configuration are changed, which parameters the terminal either accepts of refuses. Depending on the used expanded packet, the message changing takes place in the following manner. By using the packet of type 225 (fig. 3a), the message exchange connected to the auto/zero-configuration comprises an EAP Request/Vendor-specific request and the corresponding reply. In the autoconfiguration type packet (fig. 3b) the message exchange takes place in the following manner, in which case the request and the reply form of EAP-Request/Autoconfig messages as well as EAP-Response/Auto-config messages. Further, in connection with the EAP/SIM, the messages are EAP-Request/SIM/Auto-config and EAP-Response/SIM/Auto-config. Further negotiations or message exchanges are no longer performed. If the terminal does not support auto/zero-configuration inside the EAP, it simply rejects the message and continues after the EAP negotiations with conventional configuration methods on the vlP level (virtual Internet Protocol).

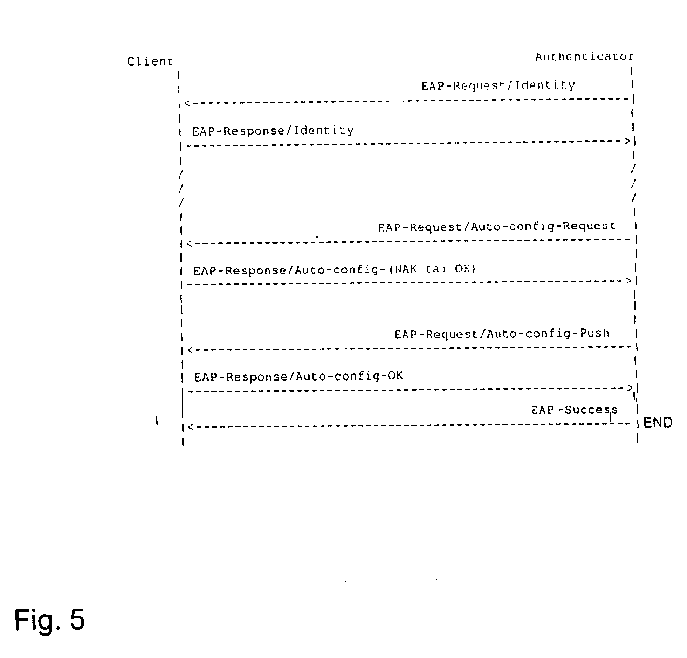

Fig. 5 presents a second advantageous embodiment of the auto/zero-configuration negotiation according to the invention, which includes several service request-reply message exchanges. First, the terminal is identified, after which the message exchange is message change connected to the EAP. Next, the service request offered by the authenticator is in practice a proposal to continue the negotiation (EAP-Request/Auto-config-Request). The terminal replies to this in its reply message either negatively or positively, EAP-Response/Auto-config-(NAK / OK). If the response from the terminal is negative (NAK), the autoconfiguration is continued with conventional methods on the IP level (END).

When the terminal replies positively (OK), the change of service request-reply-messages connected to the configuration is performed, in which case the parameters belonging to the auto/zero-configuration are declared. In its first positive reply (EAP-Response/Auto-config-OK), the terminal can provide the authenticator with data about itself as well as the parameters it supports. Examples of these parameters include, for example, AC_APN, which tells the APN name provided by the terminal; AC_SECASSOC, which is data on the security parameters offered by the terminal (SA, Security Association). In addition, the terminal can request the tunnelling method it desires, as well as a list of the supported auto/zero-configuration parameters.

In auto/zero-configuration it is in addition possible to exchange parameters, such as, for example, AC_ACCEPT_FA, which is a request data from a foreign agent; AC_ACCEPT_HA, which requests for data from the home agent; AC_ACCEPT_COA, with which the IP address is accepted for the terminal (Card-of-Address); AC_ACCEPT_DNS, with which data from DNS servers (Domain Name System) is accepted, AC_ACCEPT_GW, with which the default gateway is accepted. In addition, the terminal can request parameters from a supported tunnelling as well as data connected to invoicing. The AC_ACCEPT parameter fields as described are advantageous to be presented in the bit mask form, which saves room.

The authenticator can ask a part of the data offered to the terminal from the home network of the terminal. This function is very useful in roaming situations, and with that the use of APN has an even more important meaning when the home network of a terminal is searched for and the services offered to the terminal are listed.

The present invention can be is backwards compatible. If the terminal does not understand the expansion of the EAP offered, it advantageously leaves the function undetected and takes care of both the autoconfiguration and finding an agent with means it knows. The invention does not necessarily require changes in the WLAN base stations, but only authentication to a locally controlling server, as well as the terminal.

It is obvious that the above-described different embodiments of the invention can be combined to provide various embodiments of the invention. Therefore, the above-presented examples must not be interpreted as restrictive to the invention, but the embodiments of the invention can be freely varied within the scope of the inventive features presented in the claims hereinbelow.

## Claims

1. A method for controlling handoff (1, 3) taking place from a wireless data transfer network to another, in which method traffic coming to a terminal (T) is routed to the home network of the terminal, which home network is arranged to know a foreign network (F) where a current location of the terminal (T) belonging to the home network is, in which case the traffic is further directed to the foreign network (F) to be transmitted to the terminal, **characterized in that** in the method
i) autoconfiguration is performed for providing an address for the terminal to be used for directing outbound traffic,
ii) a foreign agent is found in order to determine the location of the terminal (T),
in which method these procedures i) and ii) are combined to take place substantially simultaneously during one message exchange by means of a new service request/response message pair being formed to be added to EAP protocol, and transferred as a part of an internal message exchange of the wireless data transfer network.

2. The method according to claim 1, **characterized in that** in the method the wireless network is a WLAN network.

3. The method according to any of the claims 1 or 2, **characterized in that** the APN identifier (Access Point Name) of the terminal (T) is transmitted in order to find the home network of the terminal, as well in order to bring other parameters to the terminal (T).

4. The method according to any of the claims 1 to 3, **characterized in that** a new message type is formed for autoconfiguration.

5. A system for controlling handoff (1, 3) taking place in a wireless data transfer network, which system comprises a terminal (T) as well as a router (AR) for routing traffic coming to the terminal, which system in addition comprises a home network, where the data connected to the terminal (T) is located, as well as a foreign network (F), where the terminal (T) is located, **characterized in that** the system comprises
i) means for performing autoconfiguration for providing an address to the terminal (T) to be used for directing outbound traffic and
ii) means for foreign agent discovery and for determining a current location of the terminal (T),
in which case the autoconfiguration and the foreign agent discovery are arranged to take place substantial during one message exchange, by means of a new service request/response message pair, which the system is arranged to form to be added to EAP protocol.

## Patentansprüche

1. Verfahren zur Steuerung einer Verbindungsweiterschaltung (1, 3), die von einem drahtlosen Datenübertragungsnetzwerk zu einem anderen erfolgt, wobei in dem Verfahren Netzwerkverkehr, der bei einem Terminal (T) ankommt, über das Heimatnetzwerk des Terminals geführt wird, und wobei das Heimatnetzwerk zur Kenntnis eines Fremdnetzwerkes (F) einer gegenwärtige Position des zum Heimatnetzwerk zugehörigen Terminals (T) eingerichtet ist, wobei in diesem Fall der an das Terminal zu übertragene Netzwerkverkehr an das Fremdnetzwerk weitergeleitet wird, **dadurch gekennzeichnet, dass** in dem Verfahren
i) eine Autokonfiguration zum Bereitstellen einer Adresse für das Terminal durchgeführt wird, die zum Adressieren von ausgehendem Netzwerkverkehr verwendet wird,
ii) ein Fremd-Agent zur Feststellung der Position des Terminals (T) gesucht wird,
wobei in dem Verfahren diese Abläufe i) und ii) kombiniert werden, um während eines Nachrichtenaustausches im Wesentlichen gleichzeitig mittels eines neuen Nachrichtenpaares einer Dienstanfrage/-antwort abzulaufen, das zur Hinzufügung zum EAP Protokoll gebildet wird und als ein Teil eines internen Nachrichtenaustausches des drahtlosen Datenübertragungsnetzwerkes übertragen wird.

2. Verfahren nach Anspruch 1, **dadurch gekennzeichnet, dass** in dem Verfahren das drahtlose Netzwerk ein WLAN Netzwerk ist.

3. Verfahren nach einem der Ansprüche 1 oder 2, **dadurch gekennzeichnet, dass** der APN Bezeichner (Access Point Name) des Terminals (T) zu dem Zweck des Auffindens des Heimatnetzwerkes des Terminals und zu dem Zweck der Übermittlung anderer Parameter zu dem Terminal (T) übertragen wird.

4. Verfahren nach einem der Ansprüche 1 bis 3, **dadurch gekennzeichnet, dass** ein neuer Nachrichtentyp für die Autokonfiguration gebildet wird.

5. System zum Steuern einer Verbindungsweiterschaltung (1, 3) in einem drahtlosen Datenübertragungsnetzwerk, wobei das System ein Terminal (T) sowie einen Router (AR) zum Weiterleiten von beim Terminal ankommenden Netzwerkverkehr umfasst, wobei das System zusätzlich ein Heimatnetzwerk aufweist, in dem sich die mit dem Terminal (T) verbundenen Daten befinden, sowie ein Fremdnetzwerk (F), in dem sich das Terminal (T) befindet, **dadurch gekennzeichnet, dass** das System
i) Mittel zum Ausführen einer Autokonfiguration hat, um eine Adresse für das Terminal bereitzustellen, die zum Adressieren von ausgehendem Netzwerkverkehr verwendet wird, und
ii) Mittel zur Ermittlung eines Fremd-Agenten und zur Bestimmung einer gegenwärtigen Position des Terminals (T) hat,
wobei in diesem Fall die Autokonfiguration und die Ermittlung des Fremd-Agenten eingerichtet sind, um im Wesentlichen während eines Nachrichtenaustausches, mit einem neuen Nachrichtenpaar für eine Dienstanfrage/-antwort abzulaufen, das durch Einrichtung des Systems gebildet und zum EAP Protokoll hinzugefügt wird.

## Revendications

1. Procédé pour commander un transfert (1, 3) qui s'effectue depuis un réseau de transfert de données sans fil à un autre, procédé selon lequel le trafic arrivant à un terminal (T) est acheminé au réseau domestique du terminal, lequel réseau domestique est agencé de manière à connaître un réseau étranger (F), dans lequel un emplacement actuel du terminal (T) appartenant au réseau domestique se situe, auquel cas le trafic est dirigé alors vers le réseau étranger (F) pour être transmis au terminal, **caractérisé en ce que**, dans le procédé
i) une autoconfiguration est exécutée pour délivrer une adresse pour le terminal devant être utilisé pour diriger le trafic transmis vers l'extérieur,
ii) un agent étranger est trouvé pour déterminer l'emplacement du terminal (T),
procédé dans lequel ces procédures i) et ii) sont combinées de manière à être exécutées sensiblement simultanément pendant un échange de message au moyen d'une nouvelle paire de demande de service / message de réponse, qui est formée pour être ajoutée à un protocole EAP, et transférées en tant que partie d'un échange de message interne du réseau de transfert de données sans fil.

2. Procédé selon la revendication 2, **caractérisé en ce que**, conformément au procédé, le réseau sans fil est un réseau WLAN.

3. Procédé selon l'une quelconque des revendications 1 ou 2, **caractérisé en ce que** l'identifiant APN (Access Point Name) du terminal (T) est transmis pour trouver le réseau domestique du terminal, ainsi que pour fournir d'autres paramètres au terminal (T).

4. Procédé selon l'une quelconque des revendications 1 à 3, **caractérisé en ce qu'**un nouveau type de message est formé pour une autoconfiguration.

5. Système pour la commande d'un transfert (1, 3) s'effectuant dans un réseau de transfert de données sans fil, lequel système comprend un terminal (T) ainsi qu'un routeur (AR) pour acheminer le trafic arrivant au terminal, lequel système comprend en outre un réseau domestique, dans lequel les données connectées au terminal (T) sont situées, ainsi qu'un réseau étranger (F), dans lequel le terminal (T) est situé, **caractérisé en ce que** le système comprend:
i) des moyens pour effectuer une autoconfiguration pour envoyer une adresse au terminal (T) devant être utilisé pour diriger un trafic transmis vers l'extérieur,
ii) des moyens pour découvrir un agent étranger et pour déterminer un emplacement actuel du terminal (T),
auquel cas l'autoconfiguration et la découverte de l'agent étranger sont agencés de manière être exécutées essentiellement pendant un échange de message, au moyen d'une nouvelle paire demande de service / message de réponse, pour laquelle le système est agencé afin de l'ajouter à un protocole EAP.
